# EUROPÄISCHE PATENTANMELDUNG

(11) **EP 3 540 490 A2**
(43) Veröffentlichungstag der Anmeldung: **18.09.2019**
(21) Anmeldenummer: 19156787.4
(22) Anmeldetag: 12.02.2019
(51) Int. Cl.: G02B 7/08, G06K 7/10, G03B 3/10

(54) **OPTOELEKTRONISCHER SENSOR UND VERFAHREN ZUR FOKUSVERSTELLUNG EINER OPTIK**

(30) Priorität: 16.03.2018 DE 102018106186
(71) Anmelder: Sick AG, 79183 Waldkirch (DE)
(72) Erfinder: Schneider, Florian, 79276 Reute (DE); Schäfer, Georg, 79106 Freiburg (DE)

(57) **Zusammenfassung**

Es wird ein optoelektronischer Sensor (10) mit einer fokusverstellbaren Optik (14, 30) angegeben, wobei der Sensor (10) ein bewegliches Trägerelement (20) mit der Optik (14, 30) und ein feststehendes Halteelement (22) sowie zum Verändern der Position des beweglichen Trägerelements (20) gegenüber dem Halteelement (22) und somit der Einstellung einer Fokuslage eine Fokusverstelleinheit (24, 26) aufweist, die eine Tauchspule (24) und eine Magneteinheit (26) umfasst. Dabei ist die Tauchspule (24) als Leiterkartenspule ausgebildet.

## Beschreibung

Die Erfindung betrifft einen optoelektronischen Sensor mit einer fokusverstellbaren Optik und ein Verfahren zur Fokusverstellung einer Optik nach dem Oberbegriff von Anspruch 1 beziehungsweise 15.

Die Fokussierung oder umgangssprachlich das Scharfstellen einer Optik ist eine Aufgabenstellung, die sich für eine sehr große Gruppe von optoelektronischen Sensoren stellt. Das betrifft sowohl die Sendeseite, wenn ein Lichtstrahl ausgesandt oder ein Lichtmuster projiziert werden soll, als auch die Empfangsseite für die Erfassung von Lichtstrahlen oder sogar Bildern. In dieser Beschreibung werden als Beispiele für eine sendeseitige Fokussierung ein Barcodescanner mit fokussiertem Lesestrahl und für eine empfangsseitige Fokussierung eine Kamera zur fokussierten Aufnahme von Bildern herangezogen, ohne damit andere optoelektronische Sensoren mit Fokusverstellung auszuschließen. Wie das Beispiel einer 3D-Kamera mit projiziertem Beleuchtungsmuster zeigt, besteht auch Bedarf an sowohl sende- wie empfangsseitiger Fokussierung.

Kameras werden unter anderem in industriellen Anwendungen in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Trotz dieser größeren Vielfalt bei kamerabasierten Codelesern sind weiterhin verbreitet die spezialisierten, dafür in der Regel bei gleicher Leseleistung preiswerteren Barcodescanner im Einsatz. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage eines Codelesers oder einer Kamera für Inspektions- oder Vermessungsaufgaben über einem Förderband. Die Kamera nimmt während der Relativbewegung des Objektstroms auf dem Förderband Bilder auf und speichert die erfassten Informationen beziehungsweise leitet in Abhängigkeit der gewonnenen Objekteigenschaften weitere Bearbeitungsschritte ein. Solche Bearbeitungsschritte können in der an das konkrete Objekt angepassten Weiterverarbeitung an einer Maschine bestehen, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Von einem Codeleser werden die Objekte für eine korrekte Sortierung oder ähnliche Bearbeitungsschritte anhand der angebrachten Codes identifiziert.

Um mit verschiedenen Arbeitsabständen umzugehen und insbesondere Codes in unterschiedlichen Abständen lesen zu können, muss die Fokusposition eingestellt werden. Dafür gibt es unterschiedliche Technologien. Typischerweise wird die Position des Objektivs verändert, also der Abstand zwischen Objektiv und Bildsensor, um eine Umfokussierung zu erzielen. Diese Bewegung lässt sich durch einen Schrittmotor antreiben. Beispielsweise erzeugt der Schrittmotor über einen Exzenter und einen Schwenkhebel eine über die jeweilige Schrittposition definierte Auf- und Abbewegung einer Sendelinse, die über eine Blattfeder gelagert ist. Dies ist aber mit recht hohen Kosten verbunden, und der Schrittmotor beansprucht viel Bauraum. Die EP 2 498 113 A1 schlägt für einen kamerabasierten Codeleser eine Fokusverstellung mit Hilfe einer motorgetriebenen Kurvenscheibe und einer Parallelführung des Objektivs in einer Federlagerung vor, die mehrere flache Blattfedern aufweist. Die Nachteile hinsichtlich Aufwand und Bauraum werden dadurch nicht beseitigt.

Alternativ zu einem Schrittmotor werden auch Tauchspulen eingesetzt. Deren Wirkungsprinzip basiert auf der Lorentzkraft, die auf eine stromdurchflossene Spule in einem Magnetfeld ausgeübt wird. Typischerweise sind Tauchspulen-Aktoren an dünnen Biegebalken aufgehängt, was zu einer hohen mechanischen Schockempfindlichkeit führt. Die DE 10 2016 112 123 A1 offenbart einen Barcodescanner mit einer Sendeoptik auf einem Schwenkarm, der zum Fokussieren des Lesestrahls mit einem Tauchspul-Aktor verschwenkt wird. Dazu ist die Tauchspule auf dem Schwenkarm zwischen stehenden Magneten angeordnet, und somit müssen Leitungen zur Bestromung der Tauchspule zu einem beweglichen Teil geführt werden. Außerdem ist die dort benutzte gewickelte Tauchspule wiederum relativ teuer und baugroß.

Die US 2005/0185057 A1 offenbart eine Vibrationskompensation für eine Kamera. Mittels gedruckter Spulen kann durch eine Gegenbewegung in X- und Y-Richtung eine von einem Vibrationssensor erfasste Bewegung kompensiert werden. Das betrifft aber nicht die Fokusverstellung.

Aus der US 2009/0252488 A1 ist ein Kameramodul mit beweglicher Linse für ein Mobiltelefon bekannt, wobei die Bewegung der Linse zwischen zwei magnetischen Einheiten zugleich für die Fokussierung und eine Bildstabilisierung sorgt. Eine der magnetischen Einheiten kann als Spule in eine gedruckte Leiterplatte eingebettet sein. Dieses Kameramodul ist jedoch für industrielle Anwendungen weder vorgesehen noch geeignet.

In der noch unveröffentlichten europäischen Patentanmeldung mit dem Aktenzeichen 18155926.1 wird für eine Fokusverstellung eine Führung mit mindestens einer gerollten Blattfeder vorgeschlagen. Dieses Dokument befasst sich aber nicht mit der Frage, wie die Bewegung angetrieben wird.

Es ist daher Aufgabe der Erfindung, eine verbesserte Fokusverstellung anzugeben.

Diese Aufgabe wird durch einen optoelektronischen Sensor mit einer fokusverstellbaren Optik und ein Verfahren zur Fokusverstellung einer Optik nach Anspruch 1 beziehungsweise 15 gelöst. Der Sensor umfasst eine Optik und eine Fokusverstellung dafür. Dazu befindet sich die Optik auf einem beweglichen Trägerelement. Für eine Einstellung einer Fokuslage verändert eine Fokusverstelleinheit die Position des beweglichen Trägerelements gegenüber einem feststehenden Halteelement. Die Fokusverstelleinheit basiert auf dem einleitend genannten Prinzip einer Tauchspulaktorik und umfasst eine Tauchspule und eine Magneteinheit. Die Erfindung geht nun von dem Grundgedanken aus, die Tauchspule als Leiterkartenspule auszubilden.

Die Erfindung hat den Vorteil, dass ein industrietaugliches Design angegeben ist. Die Tauchspulaktorik wird besonders kompakt, insbesondere wenn die Leiterkarte der Tauchspule zugleich für andere Zwecke verwendet beziehungsweise umgekehrt die Tauchspule in eine vorhandene Leiterkarte integriert wird. Eine Leiterkartenspule lässt sich auch besonders einfach mit vorhandenen Gerätekonzepten vereinbaren. Insgesamt entsteht ein robuster, einfacher und kostengünstiger Aufbau.

Vorzugsweise ist die Tauchspule auf dem feststehenden Halteelement und die Magneteinheit auf dem beweglichen Trägerelement angeordnet. Dann sind keine Zuleitungen zu dem beweglichen Trägerelement notwendig, also dem bewegten Teil der Fokusverstelleinheit.

Bevorzugt sind mehrere Tauchspulen vorgesehen, welche das bewegliche Trägerelement umgeben. Das bewegliche Trägerelement wird also von mindestens zwei Seiten her bewegt. Dementsprechend sind vorzugsweise auch mehrere Führungsstrukturen vorgesehen. Mehrere Magneteinheiten auf dem beweglichen Trägerelement, jeweils einer Tauchspule zugeordnet, sind ebenso möglich wie Magneteinheiten, beispielsweise in Form eines Ringmagnet, die mehreren Tauchspulen zugeordnet sind. Die Tauchspulen werden bevorzugt für eine gleichmäßige und gerade Bewegung synchron angesteuert. Auch eine gezielte asynchrone Steuerung ist vorstellbar, die je nach mechanischem Aufbau und Führung des beweglichen Trägerelements zusätzliche Verkippungen erzeugt.

Die Fokusverstelleinheit weist bevorzugt einen Positionssensor zum Bestimmen der eingestellten Fokuslage auf. Zwar ist theoretisch schon durch die Ansteuerung der Tauchspule eine Fokuslage vorgegeben, aber erst die Bestimmung der tatsächlich resultierenden Fokusposition führt zu einer hohen Präzision. Die tatsächliche Fokuslage kann für eine Regelschleife (Closed-Loop) genutzt werden.

Der Positionssensor ist bevorzugt als Hallsensor zum Bestimmen der Position der Magneteinheit ausgebildet. Die Magneteinheit erfüllt damit eine Doppelfunktion zum Erzeugen der Bewegung und als magnetischer Marker für den Positionssensor. Ein Hall-Sensor ist dafür besonders geeignet und als kompaktes integriertes Bauteil erhältlich.

Positionssensor und Tauchspule sind bevorzugt auf derselben Leiterkarte angeordnet. Dadurch wird eine noch kompaktere Anordnung erreicht. Vorzugsweise sind auf derselben Leiterkarte auch noch ein Spulentreiber zum Erzeugen der erforderlichen Magnetfelder in der Tauchspule und/oder eine Regelungseinheit angeordnet, in der eine Regelschleife zur Einstellung der Fokusposition mit Feedback des Positionssensors implementiert ist.

Die Tauchspule ist bevorzugt mit einer über ihre Wicklung unterschiedlichen Leiterbreite ausgebildet. Eine derart inhomogene Tauchspule hat in mindestens einem Teilbereich ihrer Wicklung eine andere Leiterbreite. Dadurch sind unterschiedliche Widerstände und folglich eine vorgebbare Ortsverteilung der Ströme und Felder über die Wicklung möglich.

Die Tauchspule weist bevorzugt in einem aktiven Bereich, in dem ihr Feld auf die Magneteinheit einwirkt, eine geringere Leiterbreite auf als in der übrigen Wicklung. So werden die unterschiedlichen Leiterbreiten einer inhomogenen Tauchspule vorteilhaft ausgenutzt. Im aktiven Bereich, in dem die Lorentzkraft für eine Fokusverstellung erzeugt werden soll, ist die Tauchspule verhältnismäßig dünn, mit entsprechend hohem Widerstand und hoher Stellkraft. Über die übrige Wicklung wird eine möglichst große Leiterbreite gewählt, denn an diesen Orten wird keine Stellkraft gebraucht, und so kann der Gesamtwiderstand der Tauchspule geringer gehalten werden. Ein derart außerhalb des Magnetfelds der Magneteinheit vergrößerter Spulenquerschnitt erlaubt also, die Tauchspule mit höheren Strömen zu betreiben und eine höhere Aktorkraft zu erzielen. Erwünschte Nebeneffekte sind eine geringere Wärmeentwicklung und geringere elektrische Spannungen.

Das bewegliche Trägerelement weist bevorzugt einen Rahmen und das feststehende Halteelement eine Parallelführung für den Rahmen auf. Der Rahmen ist insbesondere ein Rechteckrahmen und wird an zwei gegenüberliegenden Kanten des Rechtecks geführt. An mindestens einer dieser Kanten wirkt die Fokusverstelleinheit, um den Rahmen auf einer Achse senkrecht zu seiner Flachseite zu bewegen. Als Führung wird bevorzugt ein Filmgelenk eingesetzt.

Mindestens eine gerollte Blattfeder ist bevorzugt mit ihrer flachen Außenseite zwischen Trägerelement und Halteelement angeordnet. Das ergibt eine einfache und kostengünstige Führung, die dennoch alle erforderlichen Eigenschaften mitbringt. Der Kontakt zwischen gerollter Blattfeder und Halte- und Trägerelement ist flächig, nicht etwa nur über eine Kante der gerollten Blattfeder. Das sorgt für eine verlässliche Führung und Verstellung, die dann auch gehalten wird. Die gerollte Blattfeder ist bevorzugt zwischen Halteelement und Trägerelement eingeklemmt. Die gerollte Blattfeder wird somit gleichsam von beiden Seiten eingerahmt und zumindest etwas zusammengedrückt. Die entsprechenden Außenflächen der Blattfeder liegen an Halteelement und Trägerelement an. Träger- und Halteelement verformen die dazwischenliegende gerollte Blattfeder elastisch. Dementsprechend weisen vorzugsweise Trägerelement und Halteelement zueinander gerichtete Flächen auf, die parallel zueinander stehen. Es ist abweichend auch denkbar, die Orientierung und Kontur der Kontaktbereiche von Trägerelement beziehungsweise Halteelement mit der Blattfeder gezielt zu variieren und zu formen.

Die Blattfeder rollt vorzugsweise während einer Bewegung des beweglichen Trägerelements auf den Flächen auf oder ab. Während einer Verstellbewegung der Optik auf dem beweglichen Trägerelement bleibt in der Rollbewegung ein im Wesentlichen gleich langer Abschnitt der flachen Außenseite der Blattfeder im Kontakt mit den einrahmenden Flächen von Trägerelement und Halteelement. Dabei dreht sich die gerollte Blattfeder im Verlauf der Rollbewegung, und der in Kontakt stehende Abschnitt ist entsprechend der Rollbewegung zu jedem Zeitpunkt ein etwas anderer.

Das Trägerelement ist bevorzugt mittels der gerollten Blattfeder linear längs der optischen Achse der Optik beweglich gelagert. In der Verlängerung der optischen Achse befindet sich vorzugsweise ein Lichtsender oder Lichtempfänger. Die lineare Bewegung verändert dann den Abstand von Lichtsender oder Lichtempfänger zu der Optik und damit die Fokuslage.

Die gerollte Blattfeder bildet bevorzugt einen Ring. Die Blattfeder ist dazu zusammengerollt und an ihren Enden geschlossen. Ein gewisser Überstand ist vorstellbar, solange dadurch die erforderlichen elastischen Eigenschaften nicht beeinträchtigt sind. Der Begriff Ring ist zunächst topologisch gemeint. Die Form des Rings ähnelt eher einer Ellipse als einem Kreis, denn im Kontaktbereich zu Trägerelement und Halteelement folgt die gerollte Blattfeder der dort vorgegebenen Kontur, und zwar über einen gewissen Umfangsbereich, der für ausreichend Stabilität sorgt.

Die gerollte Blattfeder ist bevorzugt an dem Trägerelement und dem Halteelement fixiert. Damit wird verhindert, dass die gerollte Blattfeder bei einer Einstellung einer Fokuslage relativ zu Trägerelement oder Halteelement verrutscht. Vorzugsweise ist jeweils genau ein Fixierungspunkt vorgesehen. Das genügt einerseits für eine Fixierung und ermöglicht andererseits eine Bewegung über große Verstellwege und ohne unnötigen Widerstand.

Die Führung des beweglichen Trägerelements wird vorteilhafterweise durch mehrere Blattfedern verbessert. Das ist besonders nützlich im Zusammenhang mit den schon genannten Ausführungsformen, in denen mehrere Tauchspulen vorgesehen sind, welche das bewegliche Trägerelement umgeben.

Die Tauchspule ist bevorzugt auf einer flexiblen Leiterkarte angeordnet, die um das bewegliche Trägerelement gebogen ist. Die derart gebogene Leiterkarte umgibt das Trägerelement zumindest über einen gewissen Winkelbereich beispielsweise von mindestens 90° oder mindestens 180°, vorzugsweise ist die Leiterkarte vollständig zu einem Ring gebogen. Auf dieser Leiterkarte ist die Tauchspule aus einer oder mehreren Spulenstrukturen als Leiterkartenspule ausgebildet. Dadurch kann eine Stellkraft von mehreren Seiten auf das bewegliche Trägerelement ausgeübt werden.

Die flexible Leiterkarte ist bevorzugt mehrfach um das Trägerelement gewickelt. Das ermöglicht mehr Wicklungen der Tauchspulen beziehungsweise mehrere Spulenlagen und somit größere Stellkräfte.

Die Magneteinheit weist bevorzugt einen Ringmagnet auf. Das ist sozusagen das Gegenstück zu einer gebogenen Leiterkarte mit der Tauchspule und wird vorzugsweise, aber nicht zwingend damit kombiniert. An dem Ringmagneten können beliebig am Umfang angeordnete Tauchspulen eine Stellkraft ausüben. Eine konzentrische Anordnung mit um den Ringmagneten oder in den Ringmagneten gewickelter Leiterkarte ermöglicht Stellkräfte von allen Seiten.

Der Sensor umfasst bevorzugt einen Lichtsender, wobei die Optik als eine dem Lichtsender zugeordnete Sendeoptik ausgebildet ist, und/oder einen Lichtempfänger, wobei die Optik als eine dem Lichtempfänger zugeordnete Empfangsoptik ausgebildet ist. Der Lichtsender beziehungsweise Lichtempfänger ist vorzugsweise auf der optischen Achse der Optik angeordnet, so dass eine Bewegung des Trägerelements den Abstand dazwischen und damit die Fokuslage verändert. Es ist auch denkbar, dass die Fokuslage des Sensors sowohl sende- wie empfangsseitig verstellbar ist. In koaxialer Anordnung von Lichtsender und Lichtempfänger dient dann die Optik als gemeinsame Sende- und Empfangsoptik. In biaxialer Anordnung ist sowohl denkbar, dass Lichtsender und Lichtempfänger jeweils eine eigene Fokusverstellung mit beweglichem Trägerelement, feststehendem Halteelement und Fokusverstelleinheit aufweisen, wie dass sich Sende- und Empfangsoptik gemeinsam auf demselben beweglichen Trägerelement befinden und eine Fokusverstellung nur gemeinsam möglich ist.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Blockdarstellung einer Kamera mit fokusverstellbarer Empfangsoptik;
- Fig. 2: eine Blockdarstellung eines optoelektronischen Sensors mit Lichtsender und fokusverstellbarer Sendeoptik;
- Fig. 3: eine schematische Schnittansicht auf das Feld einer Tauchspule mit einem darin bewegten Magneten;
- Fig. 4: eine schematische Schnittansicht ähnlich Figur 3, jedoch mit einem mit dem Magneten mitbewegten magnetischen Rückschluss;
- Fig. 5: eine Frontalansicht einer Tauchspule als Leiterkartenspule;
- Fig. 6: eine Blockdarstellung einer Leiterkarte mit Tauchspule, Positionssensor und Regelung;
- Fig. 7: eine Frontalansicht einer Tauchspule mit Bereichen unterschiedlicher Leitungsdicke;
- Fig. 8: eine schematische dreidimensionale Ansicht einer Parallelführung mit Bewegung durch eine Tauchspule;
- Fig. 9: eine schematische Ansicht einer Fokusverstellung mit Tauchspule und Führung durch eine gerollte Blattfeder;
- Fig. 10: eine Draufsicht auf eine Anordnung gemäß Figur 9 mit drei gerollten Blattfedern und drei Tauchspulaktoriken;
- Fig. 11: eine schematisch Ansicht ähnlich Figur 9, jedoch mit ringförmigem Magneten und einer gebogenen flexiblen Leiterkarte mit Tauchspule;
- Fig. 12: eine Draufsicht auf eine Anordnung gemäß Figur 11, geführt durch drei gerollte Blattfedern; und
- Fig. 13: eine schematische Ansicht einer mehrfach gewickelten Leiterkarte, die in einer Anordnung gemäß Figur 11 und 12 eine mehrlagige Tauchspule ermöglicht.

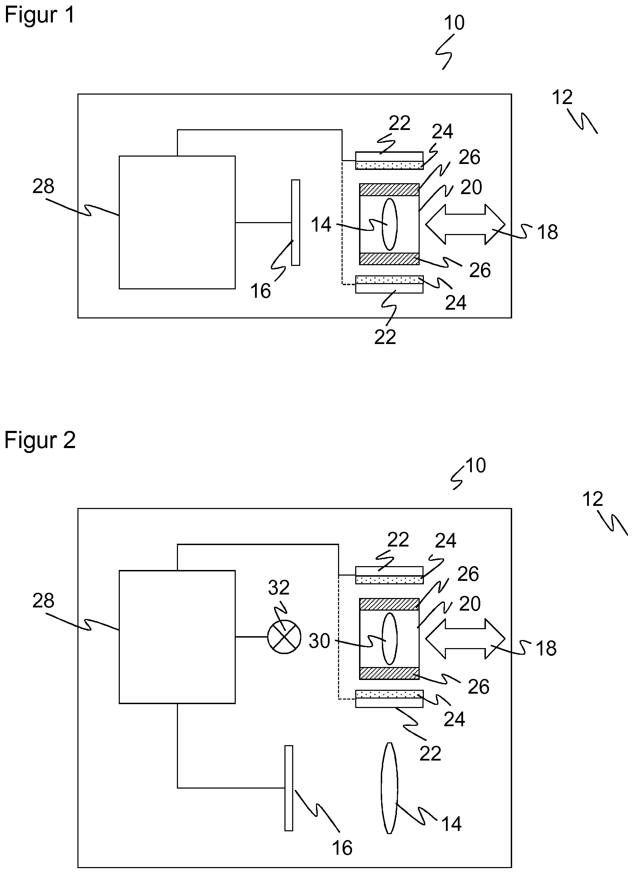

Figur 1 zeigt eine Blockdarstellung einer Kamera als Beispiel eines optoelektronischen Sensors 10 mit empfangsseitiger Fokusverstellung. Empfangslicht aus einem Erfassungsbereich 12 trifft auf eine Empfangsoptik 14, die das Empfangslicht auf einen Lichtempfänger 16 führt. Die Empfangsoptik 14 ist hier rein beispielhaft mit nur einer Linse dargestellt. Allgemein handelt es sich um ein beliebiges Objektiv aus Linsen und anderen optischen Elementen wie Blenden, Prismen und dergleichen. Im Falle einer Kamera ist der Lichtempfänger 16 ein Bildsensor mit einer Vielzahl von Lichtempfangselementen in einer Zeilen- oder Matrix-Anordnung. Andere Sensoren 10 verwenden eine Photodiode, eine APD (Avalanche Photodiode) oder auch einen SPAD-Empfänger (Single-Photon Avalanche Diode).

Die Empfangsoptik 14 ist längs ihrer optischen Achse verschiebbar, auf der auch der Lichtempfänger 16 angeordnet ist, um die Fokuslage des Sensors 10 zu verstellen. Das wird durch einen Pfeil 18 angedeutet. Dazu ist die Empfangsoptik 14 auf einem beweglichen Trägerelement 20 angeordnet und darauf gegenüber einem feststehenden Halteelement 22 beweglich. Das feststehende Halteelement 22 ist zweiteilig dargestellt, was auch als Schnitt durch ein das bewegliche Trägerelement 20 umgebendes Halteelement 22 aufgefasst werden kann und ohnehin rein beispielhaft ist.

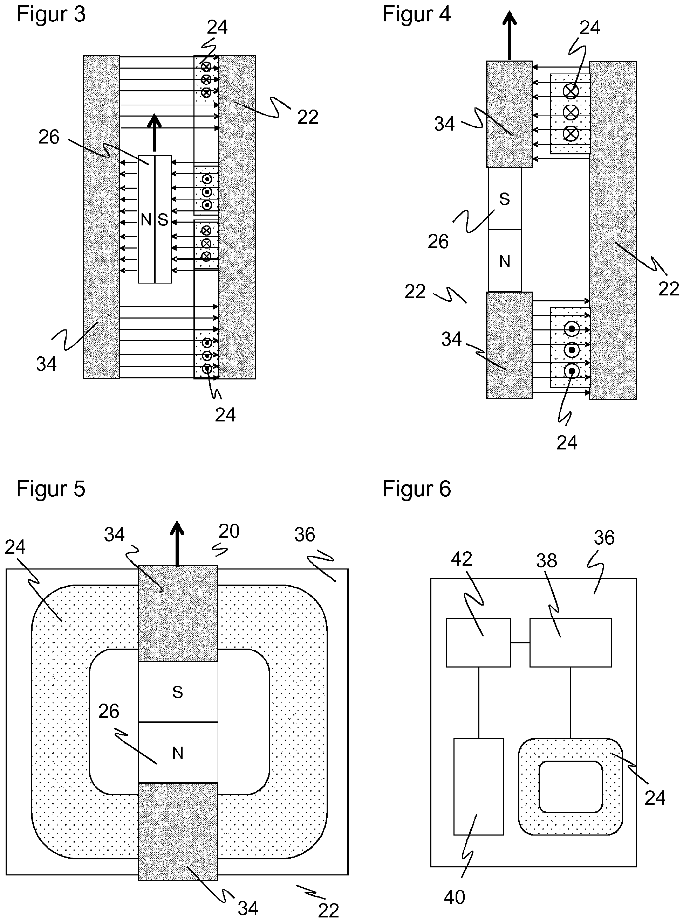

Die Bewegung für Fokusverstellungen wird durch eine Tauchspule 24 und eine Magneteinheit 26 erzeugt, die gemeinsam eine Tauchspulaktorik oder Fokusverstelleinheit bilden. Die Tauchspule 24 ist erfindungsgemäß als Leiterkartenspule ausgebildet, also in eine Leiterkarte integriert, beispielsweise als gedruckte oder beliebig anders eingebettete Struktur. Die gezeigte Anordnung der Tauchspule 24 auf dem feststehenden Halteelement 22 und der Magneteinheit 26 auf dem beweglichen Trägerelement 20 ist bevorzugt, weil dann keine Anschlussleitungen zu einem beweglichen Element erforderlich sind, kann jedoch auch umgekehrt werden. Die Fokusverstellung sowie Variationen davon werden später unter Bezugnahme auf die Figuren 3 bis 13 genauer erläutert.

Eine Steuer- und Auswertungseinheit 28 ist mit dem Lichtempfänger 16 und der Leiterkarte der Tauchspule 24 verbunden. Ein Empfangssignal des Lichtempfängers 16 wird von der Steuer- und Auswertungseinheit 28 ausgelesen und beispielsweise als Bild gespeichert, aufbereitet oder in einem kamerabasierten Codeleser auf Codebereiche untersucht, die dann decodiert werden. Mit Hilfe der Tauchspule 24 wird eine jeweils benötigte Fokuslage eingestellt, was auch mit Hilfe eines zusätzlichen, nicht gezeigten Abstandssensors als Autofokus realisierbar ist.

Figur 2 zeigt eine Blockdarstellung eines weiteren Ausführungsbeispiels eines optoelektronischen Sensors 10. Dabei bezeichnen gleiche Bezugszeichen die gleichen oder einander entsprechenden Merkmale, die nicht nochmals beschrieben werden. Im Unterschied zu Figur 1 ist hier eine sendeseitige Fokusverstellung einer Sendeoptik 30 eines Lichtsenders 32 vorgesehen, beispielsweise mit einer LED oder einem Laser als Lichtquelle. Die Empfangsoptik 14 dagegen ist starr. In weiteren Ausführungsformen kann auch die Lage der Empfangsoptik 14 mit der Fokusverstellung verändert werden, die Empfangsoptik 14 eine weitere Fokusverstellung aufweisen oder die Empfangsoptik 14 in einem koaxialen Aufbau als gemeinsame Optik ausgebildet sein, die zugleich als Sendeoptik 30 fungiert.

Die Veränderung der Fokuslage durch Bewegung der Sendeoptik 30 auf dem Trägerelement 20 erfolgt in gleicher, noch unter Bezugnahme auf die Figuren 3 bis 13 genauer zu erläuternden Weise wie in Figur 1.

Ein Beispiel eines optoelektronischen Sensors 10 mit dem Grundaufbau nach Figur 2 ist ein Barcodescanner. Der Lichtsender 32 erzeugt mittels der Sendeoptik 30 einen Lesestrahl, der nach Reflexion an einem Objekt, insbesondere Codebereich in dem Erfassungsbereich 12 zurückkehrt und über die Empfangsoptik 14 auf den Lichtempfänger 16 geführt wird. Um nicht nur einen Punkt, sondern den ganzen Barcode zu erfassen, erfolgt eine Abtastung mittels eines nicht gezeigten Scanmechanismus' beispielsweise mit einem Schwing- oder Drehspiegel, der den Lesestrahl über den Codebereich bewegt.
Aufgabe der Fokusverstellung in einem Barcodescanner ist, den Lesestrahl ausreichend zu fokussieren, so dass die Codeelemente aufgelöst werden. Dazu kann die Einstellung auf einen festen oder parametrierten Abstand genügen. Vorzugsweise wird aber der aktuelle Abstand gemessen. Als vorteilhafte Alternative zu einem zusätzlichen Abstandssensor kann dessen Lesestrahl selbst für eine Entfernungsmessung genutzt werden, indem beispielsweise durch Amplitudenmodulation eine Frequenz auf den Lesestrahl aufgeprägt und der Abstand in einem Phasenverfahren aus dem Phasenversatz zwischen Sende- und Empfangszeitpunkt bestimmt wird.

Bei Abtastung eines Barcodes wird das von dem Lichtempfänger 16 an die Steuer- und Auswertungseinheit 28 geleitete Empfangssignal in den Codebalken entsprechender Weise in seiner Amplitude moduliert. Die Steuer- und Auswertungseinheit 28 ist deshalb in der Lage, die Codeinformation auszulesen. Sie erkennt auch, wenn das Empfangssignal keinem Code entspricht. Das Auffinden von Codebereichen und das Auslesen der Codeinformation ist für Barcodescanner wie kamerabasierte Codeleser an sich bekannt und wird daher nicht näher erläutert.

Figur 3 illustriert das Prinzip einer Tauchspulaktorik. Die Tauchspule 24 befindet sich erneut vorzugsweise auf dem feststehenden Halteelement 22. Da nur das Prinzip erläutert werden soll, ist allein die Magneteinheit 26 und nicht das bewegliche Trägerelement 20 gezeigt, das mittels der Magneteinheit 26 bewegt wird. Gegenüber der Tauchspule 24 ist ein feststehender magnetischer Rückschluss 34 vorgesehen. Da die Tauchspule 24 nicht bewegt wird, müssen keine Spulenzuleitungen in bewegte Elemente geführt werden. Wird die Tauchspule 24 bestromt, so wirkt eine Lorentzkraft in der Achse des eingezeichneten Pfeils auf die Magneteinheit 26.

Figur 4 zeigt eine weitere Ausführungsform der Tauchspulaktorik. Im Gegensatz zu Figur 3 ist der magnetische Rückschluss 34 nicht feststehend, sondern mit der Magneteinheit 26 auf dem beweglichen Trägerelement 20 angeordnet.

Figur 5 zeigt eine Frontalansicht auf die Tauchspule 24 und das davon bewegte Trägerelement 20 mit Magneteinheit 26 und Rückschluss 34. Die Tauchspule 24 ist statt als herkömmliche Spule als Leiterkartenspule oder Leiterplattenspule auf einer Leiterkarte 36 des feststehenden Halteelements 22 ausgebildet. Damit ist eine Spule gemeint, die aus Leitungsstrukturen auf einer Leiterkarte hergestellt ist, beispielsweise eine gedruckte Spule oder eine Spule aus entsprechenden Metallisierungen. Rein beispielhaft ist eine einfache Wicklung aus entsprechenden Leiterstrukturen gezeigt, es sind alternativ beliebige geeignete ein- oder mehrteilige Spulenstrukturen denkbar.

Figur 6 zeigt eine Blockdarstellung der Leiterkarte 36 in einer bevorzugten Ausführungsform mit weiteren Elementen auf der Leiterkarte 36, die dort gemeinsam mit der Tauchspule 24 angeordnet sind. Ein Spulentreiber 38 sorgt über eine geeignete Bestromung der Tauchspule 24 für eine gewünschte Fokusverstellung. Um die erreichte Position des beweglichen Trägerelements 20 und damit die tatsächliche Fokuslage zu bestimmen, kann ein Positionssensor 40 eingesetzt werden, insbesondere ein Hall-Sensor, der die Position der Magneteinheit 26 ermittelt. Eine Regelungseinheit 42 ist in der Lage, über die Spulentreiber 38 die Fokuslage entsprechend der Informationen des Positionssensors 40 nachzuregeln. Alternativ kann die Regelungseinheit 42 auch als Teil der Steuer- und Auswertungseinheit 28 aufgefasst werden beziehungsweise Funktionalität von Steuer- und Auswertungseinheit 28 und Regelungseinheit 42 auf die Leiterkarte 36 und mindestens eine weitere Leiterkarte verteilt werden.

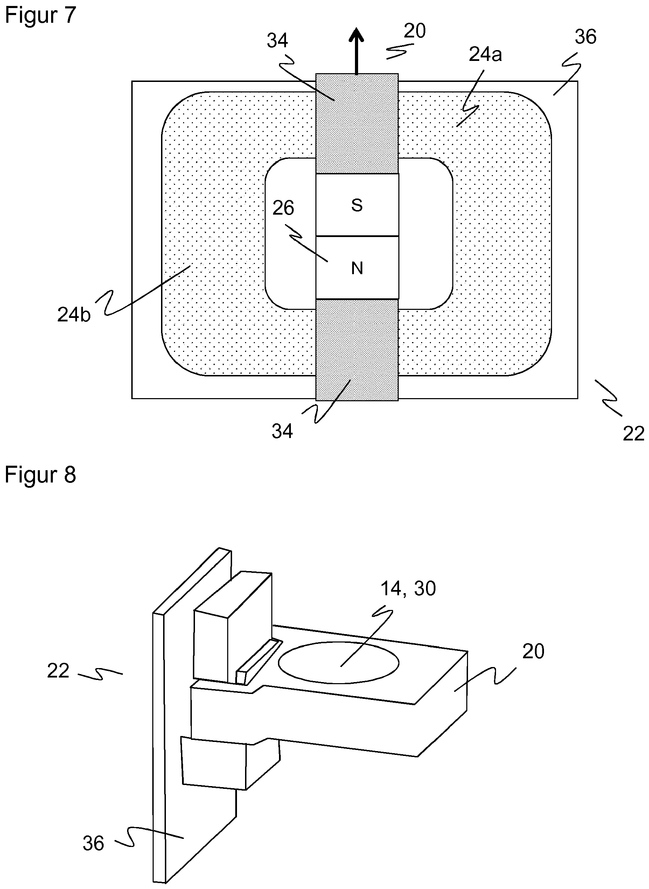

Figur 7 zeigt eine Frontalansicht auf eine weitere Ausführungsform der Tauchspule 24. Im Gegensatz zu Figur 5 hat die Tauchspule 24 hier eine inhomogene Leiterbreite. Zwischen den beiden Rückschlüssen 34 befindet sich eine Art aktiver Bereich der Tauchspulaktorik. Nur in dem aktiven Bereich erzeugt die Tauchspule 24 die Lorentzkraft, die restlichen Spulenbereiche sind im Grunde nicht relevant.

Deshalb wird in dieser Ausführungsform die Leiterbahnbreite und damit Querschnittsfläche der Tauchspule 24 in einem Teilbereich 24a entsprechend dem aktiven Bereich zwischen den beiden Rückschlüssen 34 so gering wie möglich ausgebildet, um bei maximalem Strom eine möglichst große Kraftwirkung zu erhalten. Außerhalb in einem Teilbereich 24b dagegen wird Leiterbahnenbreite vergrößert, um den Gesamtwiderstand der Tauchspule 24 gering zu halten.

Die Möglichkeit solcher inhomogenen Leitungen ist ein großer Vorteil einer Tauchspule 24 in Leiterkartentechnologie. Herkömmliche gewickelte Spulen aus isoliertem Draht ließen es gar nicht zu, den Spulenquerschnitt innerhalb einer Wicklung zu variieren.

Figur 8 zeigt eine Ausführungsform, bei der das bewegliche Trägerelement 20 als rechteckiger Rahmen ausgebildet ist. An mindestens einer Seite befindet sich die Leiterkarte 36, auf der ohne gesonderte Darstellung die Tauchspule 24 zum Einwirken auf die Magneteinheit 26 auf dem Trägerelement 20 angeordnet ist, oder wie in Figur 6 auch weitere Komponenten. Das Trägerelement 20 bewegt sich in einer Parallelführung, die beispielsweise über eine Filmgelenkführung umgesetzt ist. Auf der gegenüberliegenden Seite kann eine entsprechende weitere Leiterkarte 36 oder eine passive weitere Führung vorgesehen sein.

Eine derartige Parallelführung ist besonders im Empfangspfad einer Kamera geeignet und nur ein Beispiel. Alternativ ist auch ein Schwenkhebel als bewegliches Trägerelement 20 denkbar, wie in der einleitend genannten DE 10 2016 112 123 A1, wobei aber vorzugsweise die Tauchspule 24 nicht wie dort auf dem Schwenkhebel, sondern feststehend angeordnet ist. Eine solche Schwenkhebellösung eignet sich beispielsweise für Barcodescanner. Andere durch eine Tauchspule 24 bewegte Trägerelemente 20 in anderen Führungen sind auch möglich.

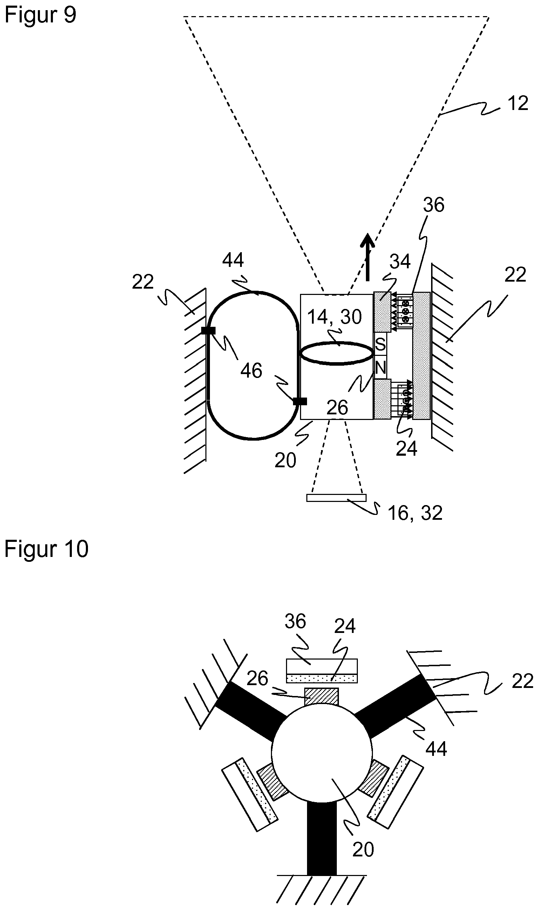

Figur 9 illustriert eine vorteilhafte weitere Führung mittels einer gerollten Blattfeder 44. Figur 9 zeigt eine Schnittdarstellung mit nur einer gerollten Blattfeder 44. Das ist zwar nicht ausgeschlossen, vorzugsweise sind aber mehrere Blattfedern 44 und auch mehrere Tauchspulaktoriken für eine möglichst gleichmäßige Kraftverteilung um das bewegliche Trägerelement 20 herum angeordnet. Figur 10 zeigt in einer Draufsicht eine in der Mitte befindliche Optik 14, 30 auf dem beweglichen Trägerelement 20, die von beispielsweise drei Aktoren beziehungsweise Tauchspulen 24 angetrieben und drei gerollten Blattfedern 44 gehalten und geführt wird. Dabei werden für eine gleichmäßige, lineare Bewegung alle Tauchspulen 24 synchron mit gleicher Kraftwirkung betrieben. Alternativ ist auch ein nicht-synchroner-Betrieb denkbar, um die Optik 14, 30 gezielt zu neigen, etwa für eine Bildstabilisierung. Die gerollten Blattfedern 44 lassen nur begrenzt Freiheit für eine Neigung und können, falls gewünscht, durch eine Führung mit mehr Freiheitsgraden wie bei dünnen Biegebalken ersetzt werden.

Unter Bezugnahme auf die Figur 9 wird das Funktionsprinzip der Führung mit gerollten Blattfedern 44 etwas näher erläutert. Die gerollten Blattfedern 44 sind an dem beweglichen Trägerelement 20 und dem feststehenden Halteelement 22 mit jeweils einem Fixierungspunkt 46 befestigt. Die Fixierung ist auch an zusätzlichen Punkten denkbar, was aber den möglichen Verstellweg verkürzt, oder sie kann umgekehrt auch weggelassen werden, da die gerollten Blattfedern 44 mit ihrer Federkraft eingeklemmt sind und die Rollreibung geringer ist als die Haftreibung.

Eine Krafteinwirkung auf das bewegliche Trägerelement 20 in Richtung der Längsachse bewirkt ein Auf- beziehungsweise Abrollen der gerollten Blattfedern 44. Die gerollten Blattfedern 44 bilden einen Ring, der im Querschnitt zu sehen ist. Durch das Einklemmen zwischen Trägerelement 20 und Halteelement 22 wird der Ring langgestreckt, weicht aber noch von einer Ellipse ab, da sich die seitlichen Bereiche der gerollten Blattfedern 44 an die jeweilige Kontur der Berührungsflächen mit dem Trägerelement 20 und dem Halteelement 22 angleichen. Durch die Querschnittsdarstellung sind die gerollten Blattfedern 44 nur als Linie zu sehen. Tatsächlich weist der Ring in Richtung senkrecht zur Papierebene, entsprechend der Natur einer Blattfeder, eine flächige Ausdehnung auf. Die entsprechenden seitlichen Außenflächen sind durch die Federkraft an Trägerelement 20 und Halteelement 22 gedrückt. Aufgrund der Rollbewegung liegt in allen Verstellpositionen die gleiche Länge der gerollten Blattfedern 44 seitlich an Trägerelement 20 und Halteelement 22 an. Die große Berührungsfläche bewirkt eine Stabilisierung der Verstellbewegungen und der eingestellten Fokuspositionen. Der Stellweg kann über die Länge des anliegenden Anteils der gerollten Blattfedern 44 beeinflusst werden.

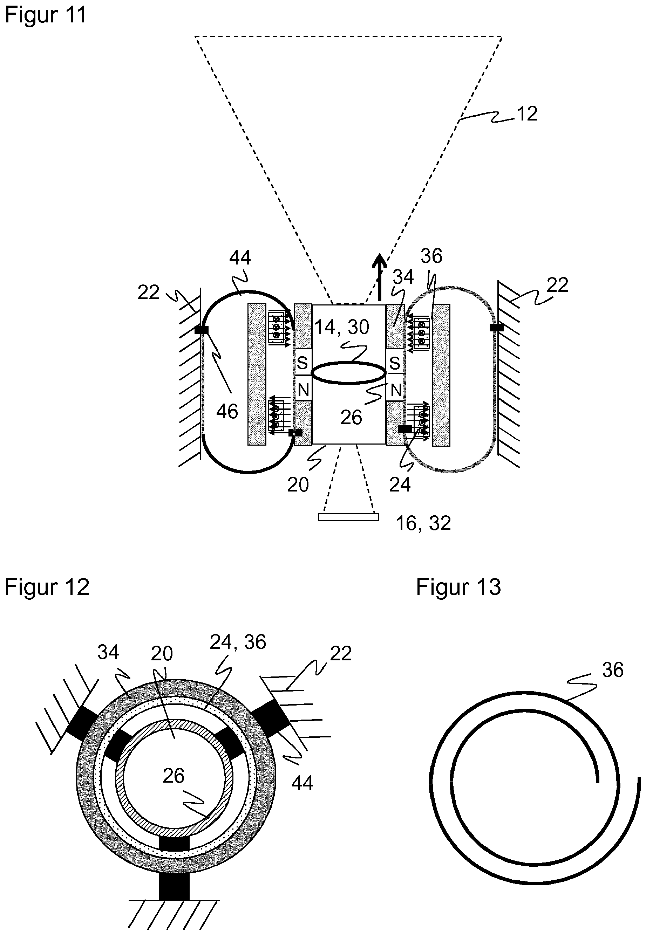

Die Figuren 11 und 12 zeigen in einer Schnittansicht beziehungsweise einer Draufsicht eine weitere Ausführungsform mit einer Ringanordnung, welche die drei separaten Tauchspulen 24 gemäß Figur 10 durch ein symmetrisches Design ersetzt. Als Führung werden nochmals gerollte Blattfedern 44 verwendet, aber die Ringanordnung bedingt nicht zwingend diese Art der Führung, sondern kann auch mit einer anderen Führung kombiniert werden.

Die Leiterkarte 36 ist in dieser Ausführungsform eine flexible Leiterkarte, die zu einem Ring gebogen ist. Die Leiterkarte 36 wird in einen umgebenden ringförmigen magnetischen Rückschluss 34 eingelegt. Leiterkarte 36 und Rückschluss 34 sind hier Teil des feststehenden Halteelements 22. In der Mitte befindet sich das als Ringmagnet ausgebildete Magnetelement 26, vorzugsweise ebenfalls mit nicht eigens dargestelltem Rückschluss. Die Tauchspule 24 auf der Leiterkarte 36 kann aus einem Stück oder in mehreren Segmenten ausgebildet sein. Die oberen und unteren stromdurchflossenen Leitungen der Tauchspule werden an einer oder mehreren Stellen miteinander verbunden. Vorzugsweise nutzt die Tauchspule die ringförmige Leiterkarte 36 aus, so dass sich Tauchspule 24 und Ringmagnet der Magneteinheit 26 über 360° gegenüberstehen. Alternativ sind aber auch diskrete Tauchspulbereiche denkbar, was dann eine alternative Implementierung der Anordnung gemäß Figur 10 ist. Der Ringmagnet kann im Übrigen auch mit separaten Tauchspulen 24 wie in Figur 10 kombiniert werden, oder umgekehrt eine gebogene flexible Leiterkarte 36 mit separaten, nicht als Ringmagnet ausgebildeten Magneteinheiten 26. Möglich ist auch eine Umkehrung der gezeigten Anordnung, in der sich die Tauchspule 24 auf einer flexiblen Leiterkarte 36 des beweglichen Trägerelements befindet und der Ringmagnet der Magneteinheit 26 Teil des feststehenden Halteelements 20 ist.

Figur 13 zeigt skizzenartig eine mehrfach zu einer Spirale gewickelte flexible Leiterkarte 36. Auf diese Weise kann eine mehrlagige Tauchspule 24 mit erhöhter Wicklungszahl erreicht werden. Umgekehrt wäre denkbar, die flexible Leiterkarte 36 nicht ganz zu einem Ring zu biegen, sondern damit nur einen gewissen Winkelbereich kleiner 360° abzudecken.

## Patentansprüche

1. Optoelektronischer Sensor (10) mit einer fokusverstellbaren Optik (14, 30), wobei der Sensor (10) ein bewegliches Trägerelement (20) mit der Optik (14, 30) und ein feststehendes Halteelement (22) sowie zum Verändern der Position des beweglichen Trägerelements (20) gegenüber dem Halteelement (22) und somit der Einstellung einer Fokuslage eine Fokusverstelleinheit (24, 26) aufweist, die eine Tauchspule (24) und eine Magneteinheit (26) umfasst,
**dadurch gekennzeichnet,**
**dass** die Tauchspule (24) als Leiterkartenspule ausgebildet ist.

2. Sensor (10) nach Anspruch 1,
wobei die Tauchspule (24) auf dem feststehenden Halteelement (22) und die Magneteinheit (26) auf dem beweglichen Trägerelement (20) angeordnet ist-

3. Sensor (10) nach Anspruch 2,
wobei mehrere Tauchspulen (24) vorgesehen sind, welche das bewegliche Trägerelement (20) umgeben.

4. Sensor (10) nach einem der vorhergehenden Ansprüche,
wobei die Fokusverstelleinheit (24, 26) einen Positionssensor (40) zum Bestimmen der eingestellten Fokuslage aufweist.

5. Sensor (10) nach Anspruch 4,
wobei der Positionssensor (40) als Hallsensor zum Bestimmen der Position der Magneteinheit (26) ausgebildet ist.

6. Sensor (10) nach Anspruch 4 oder 5,
wobei Positionssensor (40) und Tauchspule (24) auf derselben Leiterkarte (36) angeordnet sind.

7. Sensor (10) nach einem der vorhergehenden Ansprüche,
wobei die Tauchspule (24) mit einer über ihre Wicklung unterschiedlichen Leiterbreite (24a, 24b) ausgebildet ist.

8. Sensor (10) nach Anspruch 7,
wobei die Tauchspule (24) in einem aktiven Bereich, in dem ihr Feld auf die Magneteinheit (26) einwirkt, eine geringere Leiterbreite aufweist als in der übrigen Wicklung.

9. Sensor (10) nach einem der vorhergehenden Ansprüche,
wobei das bewegliche Trägerelement (20) einen Rahmen und das feststehende Halteelement (22) eine Parallelführung für den Rahmen aufweist.

10. Sensor (10) nach einem der vorhergehenden Ansprüche,
wobei mindestens eine gerollte Blattfeder (44) mit ihrer flachen Außenseite zwischen Trägerelement (20) und Halteelement (22) angeordnet ist, so dass sie während einer Bewegung des beweglichen Trägerelements (22) auf- oder abrollt.

11. Sensor (10) nach einem der vorhergehenden Ansprüche,
wobei die Tauchspule (24) auf einer flexiblen Leiterkarte (36) angeordnet ist, die um das bewegliche Trägerelement (20) gebogen ist.

12. Sensor (10) nach Anspruch 11,
wobei die flexible Leiterkarte (36) mehrfach um das Trägerelement (20) gewickelt ist.

13. Sensor (10) nach einem der vorhergehenden Ansprüche,
wobei die Magneteinheit (26) einen Ringmagnet aufweist.

14. Sensor (10) nach einem der vorhergehenden Ansprüche,
der einen Lichtsender (32) umfasst, wobei die Optik (14, 30) als eine dem Lichtsender (32) zugeordnete Sendeoptik (30) ausgebildet ist und/oder der einen Lichtempfänger (16) umfasst, wobei die Optik (14, 30) als eine dem Lichtempfänger (6) zugeordnete Empfangsoptik (16) ausgebildet ist.

15. Verfahren zur Fokusverstellung einer Optik (14, 30) eines optoelektronischen Sensors (10), wobei für eine Einstellung einer Fokuslage ein bewegliches Trägerelement (20) mit der Optik (14, 30) gegenüber einem feststehenden Halteelement (22) seine Position verändert, indem eine Tauchspule (24) angesteuert wird, in deren Feld dann eine Magneteinheit (26) bewegt wird,
**dadurch gekennzeichnet,**
**dass** eine Tauchspule (24) angesteuert wird, die als Leiterkartenspule ausgebildet ist.
